# FASCICULE DE BREVET EUROPEEN

(11) **EP 2 624 985 B1**
(45) Date de publication et mention de la délivrance du brevet: **28.06.2017**
(21) Numéro de dépôt: 11779803.3
(22) Date de dépôt: 05.10.2011
(51) Int. Cl.: B22D 17/22, B22D 17/26, B22C 7/02, B22C 9/06, B29C 33/20, B29C 45/33, B29C 45/66

(54) **MOULE POUR LA FABRICATION D'AUBE DE TURBINE PAR INJECTION DE CIRE**
FORM ZUR HERSTELLUNG VON TEILEN MITTELS WACHSINJEKTION
MOULD FOR PRODUCING PARTS BY WAX INJECTION

(30) Priorité: 06.10.2010 FR 1058098
(43) Date de publication de la demande: 14.08.2013
(73) Titulaire: Safran Aircraft Engines, 75015 Paris (FR)
(72) Inventeur: QUACH, Daniel, F-94120 Fontenay Sous Bois (FR); LOUESDON, Yvon, Marie-Joseph, F-95150 Taverny (FR); POURFILET, Patrick, F-92600 Asnieres Sur Seine (FR); VERGER, Jean-Louis, Martial, F-93140 Bondy (FR); WEHRER, Patrick, F-78600 Maisons Laffitte (FR)
(74) Mandataire: Gevers & Orès
(86) Numéro de dépôt international: PCT/FR2011/052326
(87) Numéro de publication internationale: WO 2012/045982

(56) Documents cités:
- EP-A2- 1 216 770

## Description

La présente invention porte sur un moule pour la fabrication de pièces par injection de cire dans une empreinte. Elle vise plus particulièrement la fabrication de modèles d'aubes de turbomachine destinés eux mêmes à la fabrication d'aubes par la technique de fonderie à la cire perdue.

Dans le cadre de la fabrication d'aubes selon la technique de fonderie à la cire perdue, on réalise un modèle en cire - on désigne ainsi tout matériau convenant à cet usage - autour duquel on réalise un moule carapace en matériau réfractaire. Une fois le moule carapace consolidé, on élimine le modèle en faisant fondre la cire. Il subsiste alors une cavité dans le moule carapace dans laquelle on vient couler le métal. La pièce reproduisant la forme du modèle est extraite par décochage du moule carapace.

Le modèle est lui-même réalisé dans un moule approprié dont l'empreinte définit la forme de celui-ci. La cire est injectée dans l'empreinte du moule au moyen d'une presse à injecter. La presse permet l'injection de cire dans le canal d'injection du moule via une buse d'injection.

L'empreinte de la pièce est formée d'au moins deux éléments d'empreinte qui sont maintenus fermement assemblés l'un contre l'autre au moment de l'injection de la cire sous pression. Dans ce but, les éléments d'empreinte sont supportés individuellement dans des blocs d'empreinte, mobiles l'un par rapport à l'autre. Il est à noter que l'empreinte peut être formée de plus de deux éléments, mais généralement ces autres éléments viennent en complément seulement.

Selon l'art antérieur connu du demandeur, pour la réalisation d'un modèle d'aube dont la forme générale est allongée selon une direction définie entre le pied et la tête de l'aube avec une face intrados et une face extrados, le moule est disposé sur un plan horizontal et l'empreinte dans le moule est orientée horizontalement. Le modèle est ainsi injecté selon une direction horizontale, les faces intrados et extrados étant également orientées horizontalement. Les opérations de manipulation sont toutes manuelles. L'opérateur ouvre le moule en soulevant à la main la partie supérieure du moule vers le haut. Il enlève ensuite, aussi manuellement, le modèle de l'empreinte.

Ce type de moule présente plusieurs inconvénients.

Du fait de sa disposition horizontale, l'empreinte peut recevoir des coups d'outils involontaires de la part de l'opérateur (tournevis, couteaux, buses de jets d'air) ou des marques de matières qui l'endommagent. Ces marques doivent alors faire l'objet de réparations onéreuses qui obligent à immobiliser l'outillage et donc à arrêter la production des pièces.

Le document EP 1 216 770 propose une configuration différente dans laquelle les moules sont assemblés horizontalement. Leur manipulation, notamment pour les séparer, nécessite donc de les faire glisser sur un support horizontal.

L'ouverture manuelle en raison du poids des éléments peut devenir pénible pour l'opérateur. En outre la procédure d'ouverture comprend de nombreuses opérations qui bien que simples prennent beaucoup de temps et qui peuvent nuire à la qualité du modèle.

L'enlèvement manuel du modèle en cire peut engendrer une déformation de celui-ci voire sa casse.

Le moule comporte de nombreux éléments et sous pièces ce qui prend beaucoup de temps pour leur conception et leur réalisation.

L'invention a donc pour objet un moule qui remédie à ces inconvénients.

C'est ainsi que, conformément à l'invention, le moule pour la fabrication d'un modèle d'aube de turbomachine par injection de cire dans une empreinte, l'empreinte étant composée d'au moins deux éléments d'empreinte formant respectivement au moins l'intrados et l'extrados d'une aube de turbomachine et supportés chacun dans un bloc d'empreinte, les deux blocs d'empreinte étant mobiles l'un par rapport à l'autre dans un mouvement plan horizontal entre une position fermée d'injection de la cire et une position ouverte d'extraction de la pièce après injection de la cire, en étant entraînés par un moyen de mise en mouvement, tel qu'un moyen manuel ou un moteur, est caractérisé par le fait que le dit moyen de mise en mouvement comprend une plaque fixe formant une base pour les blocs d'empreinte, une plaque mobile en translation par rapport à la plaque de base, grâce à un étrier solidaire de ladite plaque mobile et entraîné par un moyen moteur, et un mécanisme par lequel le déplacement relatif entre la plaque mobile et la plaque fixe entraîne celui des blocs.

Le simple fait d'orienter les deux éléments d'empreinte permet ainsi de résoudre les problèmes de l'art antérieur.

Avantageusement les deux blocs d'empreinte sont mobiles dans un mouvement en arc de cercle permettant de suivre le profil cylindrique de la plateforme et du talon le cas échéant.

Le moule ne se limite pas à deux éléments il est susceptible de comporter au moins un troisième élément d'empreinte supporté par un bloc d'empreinte mobile par rapport aux dits deux éléments d'empreinte entre une position fermée d'injection de la cire et une position ouverte d'extraction de la pièce après injection de la cire. Plus particulièrement, le troisième élément forme dans le cas d'une aube de turbomachine le talon de ladite aube. Il est de préférence mobile avec son support d'empreinte, en translation.

Conformément à une autre caractéristique, le moule comporte un éjecteur de pièce entraînant la pièce hors de l'empreinte à l'ouverture des éléments d'empreinte. La disposition des empreintes selon l'invention autorise l'agencement d'un éjecteur qui intervient sans manipulation de la part de l'opérateur.

Conformément à une autre caractéristique, les blocs d'empreinte sont entraînés en mouvement par un moyen de mise en mouvement, manuel ou moteur. Dans le cas d'un moyen moteur l'automatisation offre un confort d'utilisation à l'opérateur qui est bénéfique pour la qualité de la pièce. Les risques de détérioration résultant d'un incident de manipulation sont largement diminués.

Selon un mode de réalisation préféré, le moule comprend un mécanisme avec des tenons solidaires chacun d'un bloc d'empreinte et guidés dans des rainures ménagées dans la plaque mobile en translation et dans la plaque de base, le déplacement de la plaque mobile entraînant celui des blocs par l'intermédiaire des tenons. Plus particulièrement, le mécanisme comprend un moyen d'entraînement de l'éjecteur de pièce.

Conformément à une autre caractéristique, le moule comprend un moyen pour désolidariser les blocs d'empreinte de la plaque mobile de manière de manière à rendre le déplacement des blocs indépendant de celui de la plaque mobile.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.
La figure 1 est une vue d'ensemble en perspective de l'outillage avec son capot ;
La figure 2 est une vue en perspective de l'outillage sans le plateau inférieur révélant la plaque mobile, et le capot relevé ;
La figure 3 est une vue de dessus de l'outillage montrant les blocs d'empreinte en position fermée ;
La figure 4 est une vue de dessus de l'outillage montrant les blocs d'empreinte en position ouverte ;
La figure 5 est une vue de côté de l'outillage, les blocs d'empreinte étant en position ouverte et le couteau éjecteur relevé ;
La figure 6 est une vue de côté de l'outillage, le bloc d'empreinte longitudinal étant retiré ;
La figure 7 est une vue de dessus de la plaque de base sans les blocs d'empreinte, la plaque mobile sous-jacente étant visible en transparence dans sa position à droite ;
La figure 8 est une vue de dessus correspondant à celle de la figure 7, la plaque mobile étant dans sa position à gauche ;
La figure 9 est une vue en perspective du mécanisme d'actionnement du couteau éjecteur, celui-ci étant en position horizontale ;
La figure 10 est une vue correspondant à celle de la figure 9, le couteau éjecteur étant en position relevée.
Les figures 11 et 12 sont des vues en coupe selon I-I de la figure 3, et montrent un moyen de liaison amovible entre les tenons et les blocs d'empreinte.

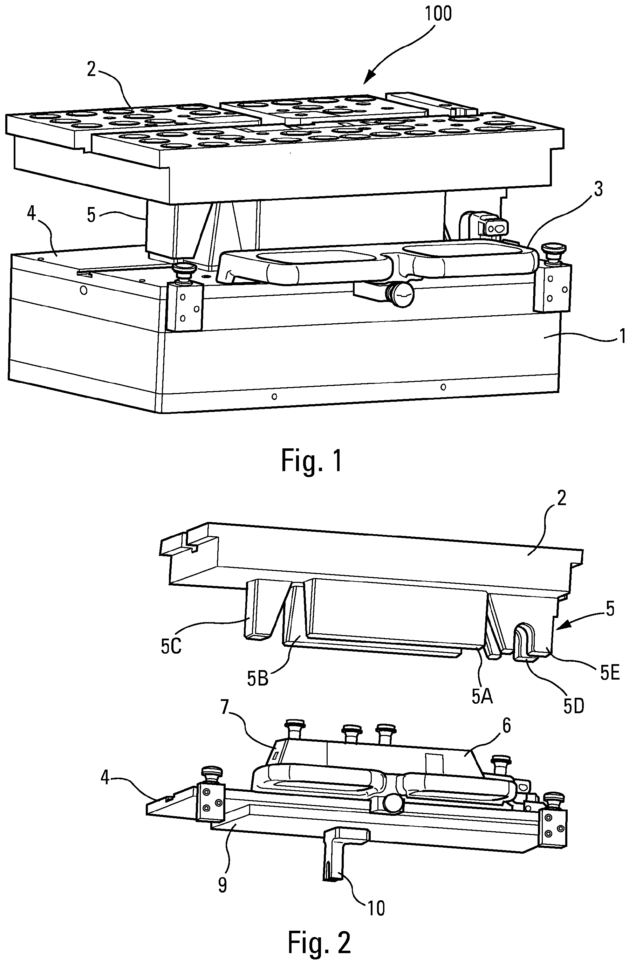

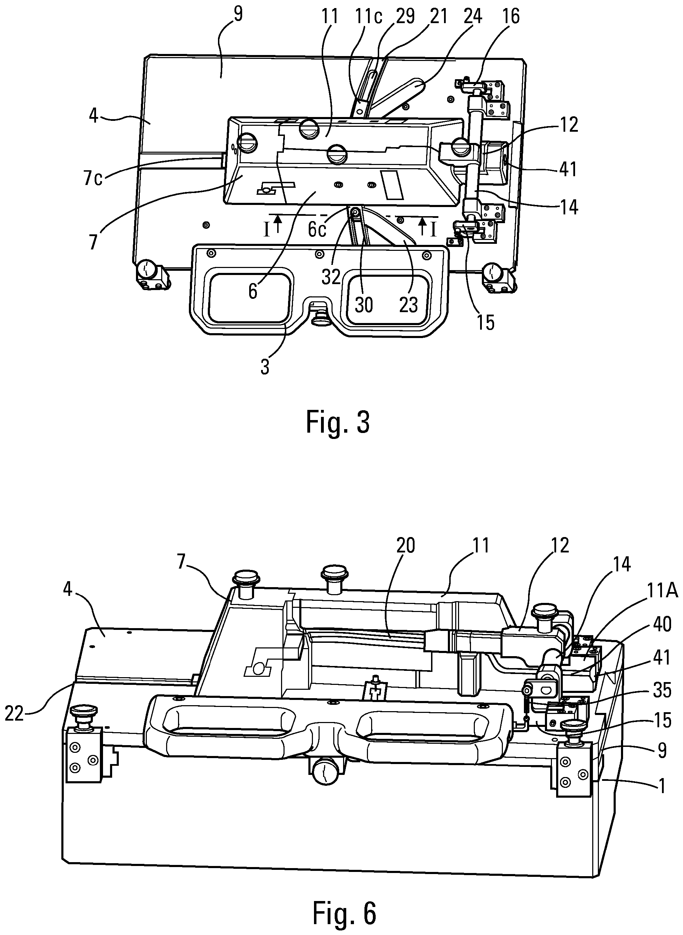

La figure 1 montre l'outillage 100 en position fermée. Il comprend un plateau inférieur 1 qui, lors de l'injection de la cire, repose sur le plateau inférieur de la presse d'injection de cire. La presse n'est pas représentée sur la figure 1. L'outillage comprend également un plateau supérieur 2 qui en position d'injection de la cire, se trouve sous le plateau supérieur de la presse d'injection de cire. L'ensemble peut être déplacé au moyen de deux poignées 3, avant et après l'injection. On distingue une plaque 4 formant une base pour les blocs d'empreinte 6, 7 et 11, visibles ensemble sur la figure 3, qui sont maintenus par les coins de fermeture d'un capot 5. Les coins formant le capot 5 sont solidaires du plateau supérieur 2.

La figure 2 montre l'outillage sans le plateau inférieur 1 et le capot 5 relevé. On distingue les blocs d'empreinte 6 et 7 sur la plaque de base 4 ainsi qu'une plaque d'entraînement 9 sous la base 4 et mobile parallèlement à cette dernière ; un étrier 10 est solidaire de la plaque 9. Il est destiné à être entraîné horizontalement par un moyen moteur non représenté. Ce moyen est logé par exemple dans le plateau inférieur 1.

Les coins 5A, 5B, 5C, 5D, 5E présentent des plans inclinés coopérant avec les faces extérieures des blocs d'empreinte 6, 7, 11. Dans la position de la figure 1 les coins maintiennent les blocs d'empreinte dans la position assemblée.

La figure 3 représente, en perspective, le dessus de l'outillage lorsqu'on a enlevé le plateau supérieur 2. La base 4 supporte trois blocs d'empreinte 6, 7 et 11, ici en position assemblée. Les trois blocs d'empreinte supportent chacun une partie de l'empreinte de la pièce à mouler, formant un élément d'empreinte. Les blocs d'empreintes 6 et 11 par exemple supportent les éléments d'empreinte reproduisant l'une l'extrados, l'autre l'intrados d'une aube de turbomachine. Le troisième bloc d'empreinte 7 supporte l'élément d'empreinte reproduisant le talon de l'aube.

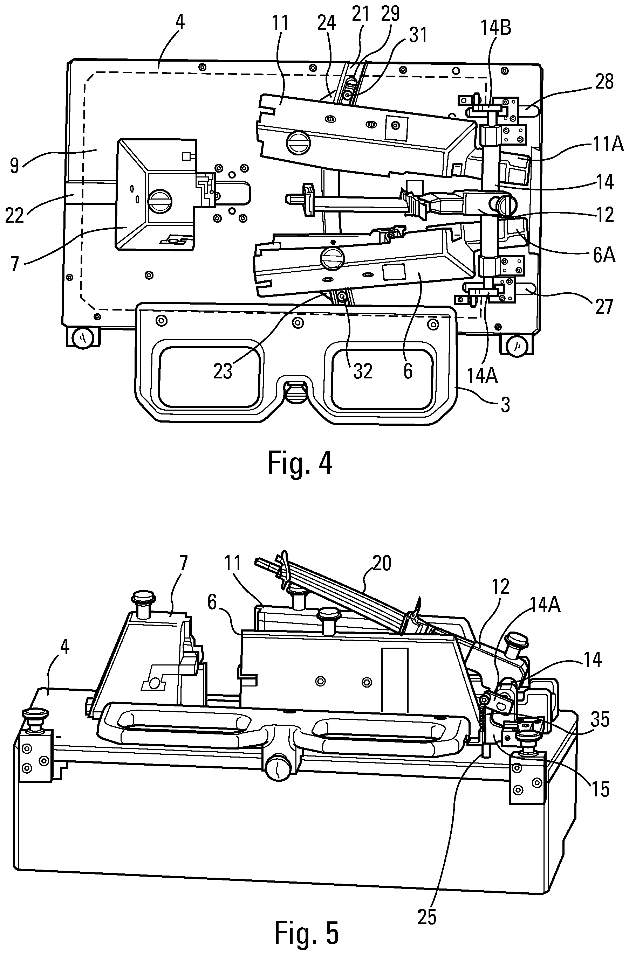

La figure 4 montre le dessus de l'outillage comme la figure 3 mais les blocs d'empreinte sont en position ouverte. Les blocs 6 et 11 ont pivoté autour d'un centre de rotation correspondant au centre du cercle formé par un rail 21 en arc de cercle. Ce rail, transversal par rapport au plan de contact des éléments d'empreinte, guide les blocs 6 et 11 dans leur déplacement entre la position fermée de la figure 3 et la position ouverte de la figure 4. Il est à noter que dans le cas où la pièce est un modèle d'aube avec une plateforme ménagée en pied de pale et un talon en tête de pale de forme cylindrique, le mouvement en arc de cercle permet de suivre leur profil respectif. Les blocs sont solidaires chacun d'un coulisseau, 6C, 11C, mobile le long du rail 21. Le bloc d'empreinte 7 est solidaire d'un coulisseau 7C, mobile et guidé en translation entre la position fermée et la position ouverte le long d'un rail 22. Les coulisseaux sont visibles sur la figure 3.

La position ouverte de la figure 4 permet de voir l'éjecteur 12 dans le prolongement duquel se trouve la pièce 20 après injection de la cire. On voit que cette pièce est ici un modèle d'aube de turbomachine. L'éjecteur 12 comprend un couteau d'éjection mobile en rotation autour d'un axe horizontal 14, perpendiculaire au rail 22. Les blocs d'empreinte 6 et 11 comprennent un prolongement chacun, 6A et 11A, vers le bord de la base 4 qui ménagent entre eux un canal 40 d'injection de cire depuis une buse d'injection 41, visibles sur la figure 6.

La figure 6 montre l'intérieur du moule duquel on a enlevé le bloc d'empreinte 6. Dans le moule fermé, la pièce 20, qui est ici un modèle d'aube, est orientée horizontalement. Un agencement possible des éléments d'empreinte est le suivant : les éléments d'empreinte dans leur bloc respectif sont orientés de manière à ce que l'élément d'empreinte supporté dans le bloc d'empreinte 6 longitudinal, absent de la figure 6, soit l'une des faces intrados ou extrados de l'aube, et l'élément d'empreinte du bloc d'empreinte 11 en vis-à-vis de l'empreinte du bloc 6, soit l'autre des faces intrados ou extrados de l'aube. L'élément d'empreinte supporté par le bloc d'empreinte 7 correspond alors au talon de l'aube. Les parties des éléments d'empreinte à proximité du couteau d'éjecteur 12 forment le pied de l'aube avec sa plateforme.

Le modèle obtenu est également visible sur la figure 5, avec le talon situé du côté de l'extrémité libre. Ceci est un exemple non limitatif d'empreinte, l'homme du métier sait comment répartir les différentes parties de la pièce entre les éléments d'empreinte de manière à obtenir la forme souhaitée après injection de la cire. On note que les éléments d'empreinte sont montés, à l'intérieur de leur bloc d'empreinte respectif, de manière amovible et peuvent être changés.

Sur la figure 6, on voit également une portion du canal 40 d'injection de cire sur la partie 11A du bloc 11, débouchant dans la buse d'injection 41 d'un côté, et dans le volume de l'empreinte de l'autre, non visible sur la figure 6.

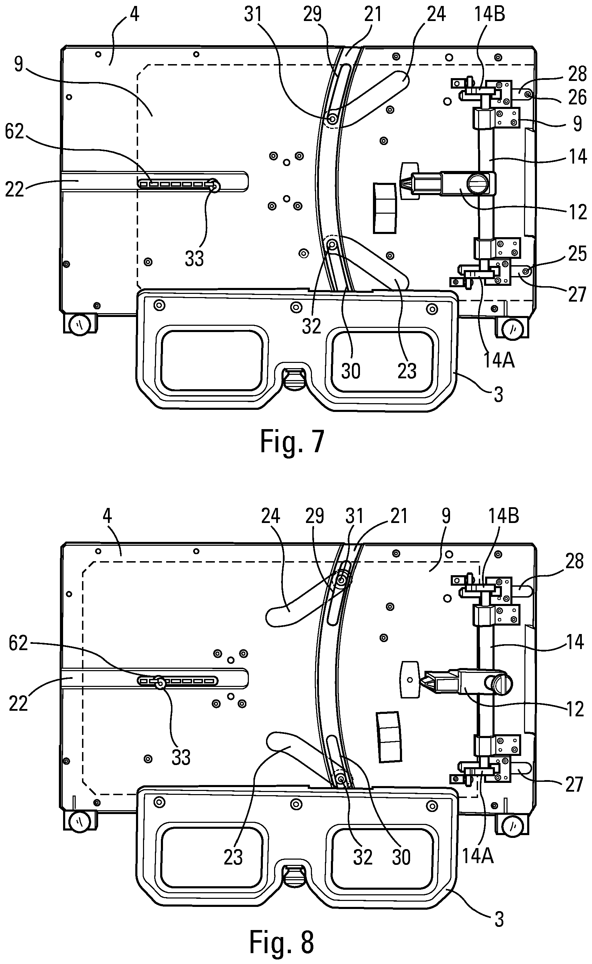

Le mécanisme d'ouverture et de fermeture est décrit ci-après. Les figures 7 et 8 montrent l'outillage sans les blocs d'empreinte. La plaque de base 4 comprend le rail transversal 21 en arc de cercle et le rail longitudinal 22. Le rail 21 comprend deux rainures 29 et 30 symétriques dans lesquelles sont logés des tenons coulissants, 31 et 32 respectivement. La plaque mobile d'entraînement, sous jacente, 9, visible par transparence, comprend deux rainures 23 et 24, symétriques également et formant un angle entre elles. Les tenons 31 et 32 sont guidés à l'intérieur de ces rainures par leur partie inférieure. Ainsi les tenons 31 et 32 comprennent chacun une partie supérieure apte à coulisser dans la rainure, 29 ou 30, de la plaque de base 4 et une partie inférieure apte à coulisser dans la rainure de la plaque mobile 9. Sur la figure 7, la plaque mobile 9 est placée sur la droite. Les rainures 23 et 24 d'une part et les rainures 29 et 30 d'autre part sont orientées les unes par rapport aux autres, de telle manière qu'en se déplaçant vers la gauche, la plaque mobile entraîne le coulissement des tenons 31 et 32 dans les rainures 23 et 24, et dans les rainures 29 et 30, de l'intérieur vers l'extérieur, la plaque 4 restant fixe.

Un tenon 33 est monté coulissant dans une rainure longitudinale 62 du rail 22 ; le tenon 33 est fixé à la plaque mobile 9.

Les tenons sont reliés par les coulisseaux respectifs 6C, 7C et 11C aux trois blocs d'empreinte 6, 7, 11. Il s'ensuit que le mouvement de translation de la plaque mobile de la droite vers la gauche, figure 7 et 8, entraîne le déplacement des blocs d'empreinte de la position fermée, figure 3, vers la position ouverte, figure 4 ou 5. La plaque 9 est mise en mouvement par un moteur, tel qu'un vérin, hydraulique, électrique ou pneumatique, logé avantageusement à l'intérieur de la plaque inférieure 1, agissant sur l'étrier 10.

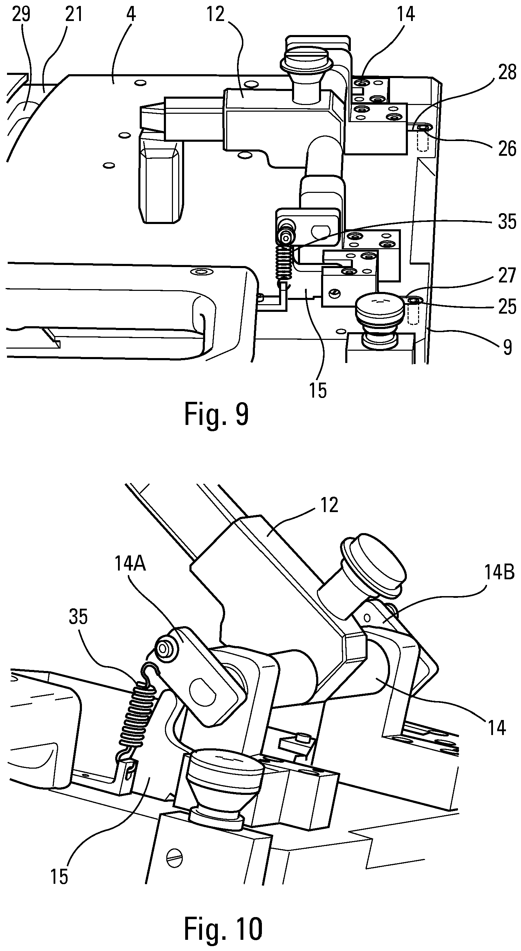

Le mécanisme d'entraînement de l'éjecteur 12 est décrit en relation avec les figures 9 et 10. Le couteau éjecteur 12 est solidaire de l'axe transversal 14 qui est supporté par deux supports solidaires de la plaque de base 4. Des plaquettes 14A et 14B verticales sont fixées aux extrémités de l'axe 14. Elles s'appuient par leur champ sur des renvois en forme de plaquettes, 15 et 16 respectivement, pivotant autour d'axes horizontaux solidaires des piles supportant l'axe transversal 14.

Des rainures 27 et 28 sont ménagées dans la plaque de base 4 ; les renvois 15 et 16 sont logés dans ces rainures et viennent en appui sur des doigts 25 et 26, verticaux et solidaires de la plaque d'entraînement mobile 9. Un ressort 35 maintient les plaquettes 14A et 14B en appui contre les renvois 15 et 16 et les renvois en appui contre les doigts 25 et 26. L'ensemble est agencé de manière à ce que le couteau éjecteur soit dans sa position horizontale quand la plaque d'entraînement est elle-même dans sa position à droite (par rapport à la figure 7 par exemple) ; c'est la position de fermeture des éléments du moule. Lorsque la plaque est déplacée vers la gauche, comme sur la figure 8, les doigts font basculer les renvois qui poussent les plaquettes vers le haut et entraînent le couteau éjecteur 12 en rotation vers le haut.

Le fonctionnement de l'outillage est le suivant.

La figure 1 montre l'outillage en position fermée. On injecte la cire via une presse appropriée par la buse 41 et le canal 40 dans son empreinte délimitée par les blocs d'empreinte intrados 6, extrados 11 et talon 7. La figure 2 montre l'outillage juste avant ou juste après l'injection de cire. Le plateau supérieur solidaire du plateau supérieur de la presse et les coins de fermeture sont en position haute. La poignée 3 permet à l'opérateur de manipuler et déplacer l'outillage d'injection sur le plan de presse ou d'autres plans de travail.

L'ouverture et la fermeture de l'outillage sont possibles en appuyant sur des boutons poussoirs non représentés qui à leur tour déclenchent le vérin moteur qui entraîne l'étrier 10 et déplace la plaque d'entraînement mobile 9 par rapport à la plaque de base 4. La cire est injectée dans l'outillage via la buse d'injection 41 et le canal 40. Les blocs d'empreinte délimitent l'empreinte dans laquelle la cire est injectée. On obtient la pièce 20, ici le modèle d'aube.

L'ouverture horizontale de l'outillage est pilotée par l'opérateur via des boutons poussoirs non représentés qui commandent l'alimentation du vérin et le déplacement de la plaque mobile 9.

Le mouvement de translation de la plaque mobile entraîne le déplacement des différents tenons, 31, 32 et 33, et doigts 25 et 26. Les tenons entraînent, dans leur déplacement, les blocs d'empreinte 6, 7 et 11, comme cela a été expliqué précédemment.

A l'ouverture, mouvement de la plaque 9 de la droite vers la gauche, les blocs d'empreinte s'écartent les uns des autres parallèlement à la base 4: Le bloc talon 7 par translation le long du rail de guidage 22, les blocs d'empreinte 6 et 11 par rotation autour du centre de rotation du rail de guidage 21. En même temps les doigts 25 et 26 appuient sur les renvois qui poussent les plaquettes et mettent en rotation l'axe 14 et le couteau éjecteur dont il est solidaire. Il est alors possible de dégager la pièce en cire qui est dans le prolongement du couteau éjecteur 12. L'extrémité du couteau a une forme de lame entourée par la cire et supporte la pièce pendant le mouvement de levage.

Pour la fermeture du moule, il suffit de commander le déplacement de la plaque mobile 9 de la gauche vers la droite. Les tenons se déplacent en sens inverse entraînant le rapprochement des blocs d'empreinte les uns vers les autres. Dans le même temps le couteau est ramené vers sa position horizontale par le ressort 35. Une fois le moule fermé, on injecte la cire par la buse d'injection pour la fabrication d'une nouvelle pièce.

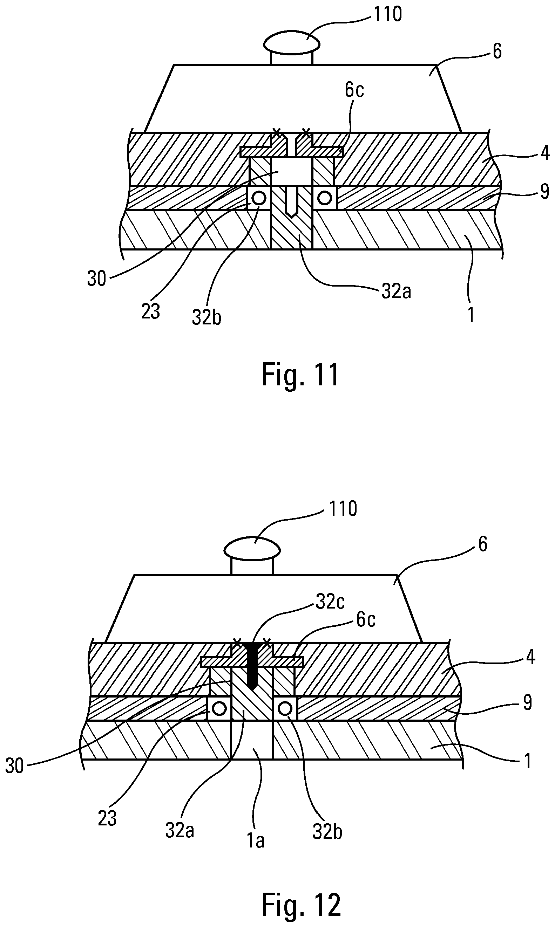

Conformément à un mode de réalisation particulier, le mécanisme d'entraînement peut être débrayé de manière à permettre l'ouverture et la fermeture manuelle des blocs d'empreinte. On a représenté sur les figures 11 et 12, un moyen de débrayage de l'entraînement des blocs d'empreinte 6 et 11 de la pale.

Ces figures sont une vue en coupe selon le plan I-I de la figure 3. Cette vue concerne le tenon 32 mobile dans les rainures 30 et 23 respectivement pour déplacer le bloc d'empreinte 6.

Le tenon 32 est réalisé en deux parties, une partie supérieure 32a apte à coulisser dans la rainure 30 et une partie inférieure 32b apte à coulisser dans la partie 23. La partie supérieure 32a est glissée verticalement dans une ouverture centrale de la partie inférieure 32b, sans y être attachée.

La partie supérieure 32a du tenon est retenue par une vis 32c au coulisseau 6C. Ce dernier est solidaire du bloc 6.

Un orifice 1a est ménagé dans le plateau inférieur 1 sous la plaque mobile 9.

Le bloc 11 peut être débrayé de la même façon.

On décrit le mouvement pour le bloc 6, ci-après.

Lorsque les blocs d'empreinte 6 et 11 doivent être entraînés par le moteur d'entraînement de la plaque mobile 9, la partie supérieure 32a du tenon est attachée au coulisseau 6C, comme on le voit sur la figure 12. Le tenon coulisse par sa partie inférieure 32b dans la rainure 23 quand la plaque mobile est mise en mouvement. La partie supérieure 32a étant solidaire de 32b coulisse dans la rainure 30 et entraîne par la vis 32c le coulisseau 6C et le bloc 6.

Lorsqu'on souhaite débrayer le mécanisme et pouvoir ouvrir ou fermer manuellement les blocs 6 et 11 de l'outillage, on positionne le tenon à l'aplomb de l'orifice 1a, puis il suffit d'enlever la vis 32c. La partie supérieure 32a du tenon glisse vers le bas dans l'orifice 1a à travers la partie inférieure 32b. Il est alors possible de déplacer le bloc 6 indépendamment de la plaque mobile. Un bouton 110 permet de saisir le bloc 6 et de le déplacer.

Il est possible de débrayer le bloc d'empreinte 7 pour le talon de la plaque mobile 9. Une solution consiste à désolidariser le tenon du coulisseau et à le retirer par le haut. Une autre solution non représentée consiste à former un tenon en extrémité d'une tige logée dans le bloc d'empreinte 7, dans son prolongement longitudinal. Lorsque le tenon est engagé dans le bloc 7 et dans la plaque mobile 9, le mouvement du bloc est solidaire de celui de la plaque 9. Le tenon est simplement engagé dans un orifice vertical pratique dans la plaque mobile 9 et peut en être extrait par un déplacement vertical. Quand on souhaite rendre le bloc 7 indépendant de la plaque mobile 9, on soulève le tenon 33 par la tige. Ce dernier peut alors glisser librement dans la rainure.

## Revendications

1. Moule pour la fabrication d'un modèle d'aube de turbomachine par injection de cire dans une empreinte, l'empreinte étant composée d'au moins deux éléments d'empreinte formant respectivement au moins l'intrados et l'extrados d'une aube de turbomachine et supportés chacun dans un bloc d'empreinte (6, 11), les deux blocs d'empreinte étant mobiles l'un par rapport à l'autre dans un mouvement plan horizontal entre une position fermée d'injection de la cire et une position ouverte d'extraction de la pièce après injection de la cire, en étant entraînés par un moyen de mise en mouvement, tel qu'un moyen manuel ou un moteur, **caractérisé par le fait que** le dit moyen de mise en mouvement comprend une plaque fixe (4) formant une base pour les blocs d'empreinte, une plaque (9) mobile en translation par rapport à la plaque de base, grâce à un étrier (10) solidaire de ladite plaque mobile et entraîné par un moyen moteur, et un mécanisme par lequel le déplacement relatif entre la plaque mobile (9) et la plaque fixe (4) entraîne celui des blocs.

2. Moule selon la revendication précédente dont le mécanisme comprend des tenons (31, 32, 33) solidaires chacun d'un bloc d'empreinte (6, 7, 11) et guidés dans des rainures (29, 30, 62) ménagées dans la plaque de base (4) fixe et des rainures (23, 24) ménagées dans la plaque (9) mobile en translation par rapport à la plaque de base (4), le déplacement de la plaque mobile entraînant celui des blocs par l'intermédiaire des tenons.

3. Moule selon l'une des revendications précédentes dont les blocs d'empreinte (6, 11) sont mobiles dans un mouvement en arc de cercle.

4. Moule selon l'une des revendications précédentes comportant un troisième élément d'empreinte supporté dans un bloc d'empreinte mobile (7) par rapport aux dits deux éléments d'empreinte (6, 11) entre une position fermée d'injection de la cire et une position ouverte d'extraction de la pièce après injection de la cire, le troisième élément formant dans le cas d'une aube de turbomachine, le talon de ladite aube.

5. Moule selon la revendication précédente dont le troisième élément supporté par un bloc d'empreinte (7) est mobile en translation.

6. Moule selon l'une des revendications précédentes comportant un éjecteur (12) de pièce entraînant la pièce (20) hors de l'empreinte à l'ouverture des éléments d'empreinte, le mécanisme comprend un moyen d'entraînement de l'éjecteur (12) de pièce.

7. Moule selon la revendication 1 comportant un moyen (32a, 32c) pour désolidariser les blocs d'empreinte de la plaque mobile de manière de manière à rendre le déplacement des blocs indépendant de celui de la plaque mobile.

## Patentansprüche

1. Form zur Herstellung eines Modells einer Turbomaschinenschaufel durch Einspritzen von Wachs in einen Formhohlraum, wobei der Formhohlraum aus mindestens zwei Formhohlraumelementen gebildet ist, die jeweils mindestens die Druck- und Saugseite einer Turbomaschinenschaufel bilden und jeweils in einem Formhohlraumblock (6, 11) getragen sind, wobei die zwei Formhohlraumblöcke in einer horizontalen, flachen Bewegung zwischen einer geschlossenen Position des Einspritzen des Wachses und einer offenen Position des Entnehmens des Werkstücks nach dem Einspritzen des Wachses zueinander beweglich sind, wobei sie durch ein Mittel zum Antreiben, wie beispielsweise ein manuelles Mittel oder einen Motor, angetrieben werden, **dadurch gekennzeichnet, dass** das Mittel zum Antreiben eine feste Platte (4), die eine Basis für die Formhohlraumblöcke bildet, eine Platte (9), die dank eines Bügels (10), der mit der beweglichen Platte fest verbunden ist und durch ein Motormittel angetrieben wird, relativ zu der Basisplatte translatorisch beweglich ist, und einen Mechanismus aufweist, durch den die relative Verschiebung zwischen der beweglichen Platte (9) und der festen Platte (4) jene der Blöcke antreibt.

2. Form nach dem vorhergehenden Anspruch, deren Mechanismus Stifte (31, 32, 33), die jeweils mit einem Formhohlraumblock (6, 7, 11) fest verbunden sind und in Nuten (29, 30, 62) geführt sind, die in der festen Basisplatte (4) angeordnet sind, und Nuten (23, 24) aufweist, die in der Platte (9) angeordnet sind, die relativ zu der Basisplatte (4) translatorisch beweglich ist, wobei die Verschiebung der beweglichen Platte über die Stifte jene der Blöcke antreibt.

3. Form nach einem der vorhergehenden Ansprüche, deren Formhohlraumblöcke (6, 11) in einer kreisbogenförmigen Bewegung beweglich sind.

4. Form nach einem der vorhergehenden Ansprüche, umfassend eine drittes Formhohlraumelement, das in einem Formhohlraumblock (7) getragen ist, der relativ zu den zwei Formhohlraumelementen (6, 11) zwischen einer geschlossenen Position des Einspritzen des Wachses und einer offenen Position des Entnehmens des Werkstücks nach dem Einspritzen des Wachses beweglich ist, wobei das dritte Element im Fall einer Turbomaschinenschaufel den Fuß der Schaufel bildet.

5. Form nach dem vorhergehenden Anspruch, deren drittes Element, das von einem Formhohlraumblock (7) getragen ist, translatorisch beweglich ist.

6. Form nach einem der vorhergehenden Ansprüche, umfassend einen Auswerfer (12) des Werkstücks, der das Werkstück (20) beim Öffnen der Formhohlraumelemente aus der Form austreibt, wobei der Mechanismus ein Mittel zum Antreiben des Auswerfers (12) des Werkstücks aufweist.

7. Form nach Anspruch 1, umfassend ein Mittel (32a, 32c), um die Formhohlraumblöcke von der beweglichen Platte derart zu lösen, um die Verschiebung der Blöcke von jener der beweglichen Platte unabhängig zu machen.

## Claims

1. A mold for producing a turbomachine blade model, by injecting wax into a cavity, the cavity consisting of at least two cavity elements forming respectively at least the intrados face and the extrados face of a blade of a turbomachine and each supported in a cavity block (6, 11), the two cavity blocks being mobile relative to one other in a horizontal movement plane between a closed position for injecting the wax and an open position for removing the part following the injection of the wax, by being driven by a means for setting into motion, such as a manual means or a motor, **characterized in that** said means for setting into motion comprises a fixed plate (4) forming a base for the cavity blocks, a plate (9) which is mobile in translation relative to the base plate, by way of a tool post (10) integral with the mobile plate and driven by a motor means, and a mechanism by which the relative displacement between the mobile plate (9) and the fixed plate (4) drives that of the blocks.

2. The mold as claimed in the preceding claim, the mechanism of which comprises lugs (31, 32, 33), each being integral with a cavity block (6, 7, 11) and being guided in slots (29, 30, 62) arranged in the fixed base plate (4) and slots (23, 24) arranged in the plate (9) that is mobile in translation relative to the base plate (4), the displacement of the mobile plate driving that of the blocks by means of the lugs.

3. The mold as claimed in one of the preceding claims, the cavity blocks (6, 11) of which are mobile in a circular arc.

4. The mold as claimed in one of the preceding claims containing a third cavity element supported in a cavity block (7) which is mobile in relation to said two cavity elements (6, 11) between a closed position for injecting the wax and an open position for removing the part following the injection of the wax, the third element forming, in the case of a blade for a turbomachine, the root of said blade.

5. The mold as claimed in the preceding claim, of which the third element supported by a cavity block (7) is mobile in translation.

6. The mold as claimed in one of the preceding claims containing a part ejector (12) for removing the part (20) from the cavity on opening the cavity elements, the mechanism comprising a means for driving the part ejector (12).

7. The mold as claimed in claim 1 containing a means (32a, 32c) for disassociating the cavity blocks from the mobile plate in such a way as to make the displacement of the blocks independent from that of the mobile plate.
